# EUROPÄISCHE PATENTSCHRIFT

(11) **EP 1 116 250 B1**
(45) Veröffentlichungstag und Bekanntmachung des Hinweises auf die Patenterteilung: **28.05.2003**
(21) Anmeldenummer: 99969530.7
(22) Anmeldetag: 16.09.1999
(51) Int. Cl.: H01G 9/022

(54) **ALUMINIUM-ELEKTROLYTKONDENSATOR**
ALUMINIUM ELECTROLYTIC CAPACITOR
CONDENSATEUR ELECTROLYTIQUE D'ALUMINIUM

(30) Priorität: 22.09.1998 DE 19843467
(43) Veröffentlichungstag der Anmeldung: 18.07.2001
(73) Patentinhaber: EPCOS AG, 81541 München (DE); JULIUS GLATZ GmbH, D-67468 Neidenfels (DE)
(72) Erfinder: WILL, Norbert, D-89522 Heidenheim (DE); RIEDESSER, Walter, D-67434 Neustadt (DE)
(74) Vertreter: Epping Hermann & Fischer
(86) Internationale Anmeldenummer: DE9902962
(87) Internationale Veröffentlichungsnummer: WO00017899

(56) Entgegenhaltungen:
- US-A- 4 622 612

## Beschreibung

Die Erfindung betrifft einen Aluminium-Elektrolytkondensator, der aus einem Kondensatorwickel aus einer mit einer dielektrisch wirksamen Sperrschicht versehenen Anodenfolie, mit einem betriebselektrolytgetränkten Abstandshalter, insbesondere aus Papier, und einer Kathodenfolie besteht, und der in einem Gehäuse eingebaut ist.

Derartige Kondensatoren werden zunächst trocken gewickelt, und anschließend wird der Kondensatorwickel in einem Bad mit dem Betriebselektrolyt imprägniert. Der Elektrolyt dringt dabei über die beiden Stirnseiten des Wickels in das Innere des Kondensators ein. Insbesondere bei der Imprägnierung von Kondensatorwickeln mit großen Durchmessern, zum Beispiel Elektrolytkondensatoren, deren Bechergehäuse einen Schraubanschluß aufweist, ist die Region im Wickel, die als letztes imprägniert wurde (in der Regel der mittlere Wickelbereich), am schlechtesten imprägniert. Die damit verbundene Gasentwicklung wirkt sich negativ auf die Brauchbarkeitsdauer des Kondensators aus.

Um dieses Problem zu beheben kann man beispielsweise die Imprägniertemperaturen vermindern. Hierbei wird jedoch die Imprägnierzeit vervielfacht, so daß ein teueres Investment benötigt wird.

Weiterhin kann auch durch Einsatz von Papieren mit geringerer Dichte eine Verbesserung der Imprägnierqualität erreicht werden. Um eine ausreichende Spannungsfestigkeit zu erreichen, müssen diese Papiere jedoch dicker sein, wodurch die Abmessungen des Kondensatorwickels oft zu groß werden.

Weiterhin gibt es auf dem Markt Imprägnierpapiere mit der Bezeichnung PDHX, die ungefähr seit Ende der 80er Jahre angeboten werden und die wie Wellblech geformt sind (Rapport-Prägung). Hierbei wird aus einem 40 µm-Papier mit der Dichte 0,75 g/cm³ ein 50 µm-Papier mit der Dichte 0,6 g/cm³ geformt. Da dieses Papier jedoch elastisch ist, entstehen Probleme beim Schneiden bzw. bei dem damit verbundenen Umspulen. Außerdem kann mit diesem Papier auch nur unter bestimmten Imprägnierbedingungen eine Verbesserung der Imprägnierung erreicht werden.

Beim Vakuum-Imprägnieren von sehr kleinen Elektrolytkondensatoren (Wickellänge < 20 mm) treten die geschilderten Probleme nicht auf.

Die Patentschrift JP 59-32121 A offenbart einen Electrolytkondensator, wobei die Abstandshalter eine eingeprägte Linienstruktur besitzen, die von einer Stirnseite des Kondensatorwickels zur gegenüberliegenden Stirnseite angeordnet ist.

Aufgabe der vorliegenden Erfindung ist es, einen Elektrolytkondensator anzugeben, bei dem auch in einem großen Kondensatorwickel ähnliche Imprägnierbedingungen erzeugt werden, wie im kleinen Elektrolytkondensatoren und bei dem die Wickelimprägnierung ohne Verlängerung der Imprägnierzeit verbessert wird.

Diese Aufgabe wird erfindungsgemäß durch die in Anspruch 1 genannten Merkmale gelöst.

Vorteilhafte Ausgestaltungen der Erfindung sind Gegenstand von Unteransprüchen.

Die Erfindung wird im folgenden anhand von Ausführungsbeispielen näher erläutert.

In der dazugehörenden Zeichnung zeigen:
- Figur 1: ein Papier mit eingeprägter Linienstruktur, gemäß Stand der Technik.
- Figur 2: ein Papier mit erfindungsgemäßer periodisch angeordneter Linienstruktur und
- Figur 3: die Imprägnierung bei unterschiedlich ausgebildeter Papierstruktur.

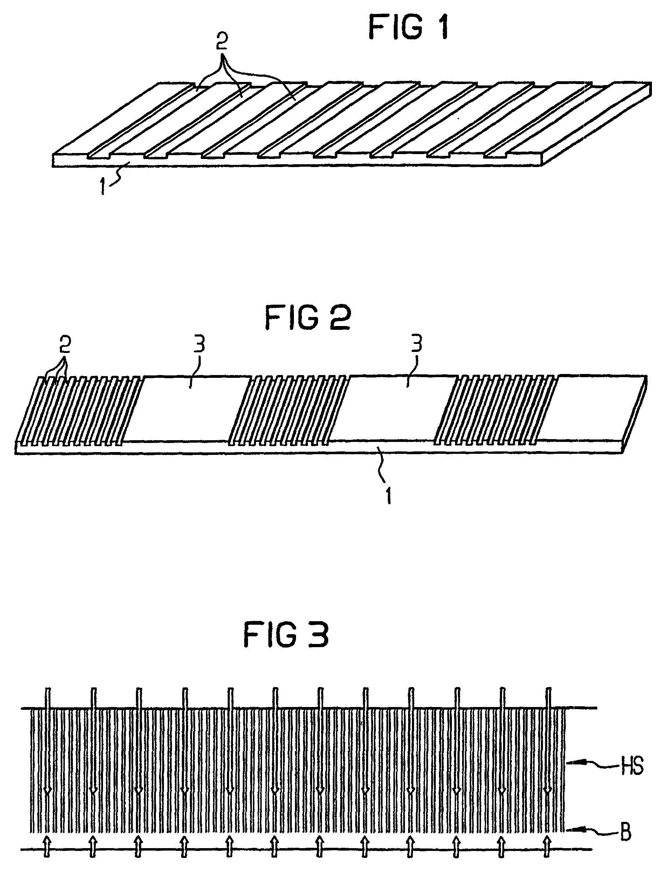

In der Figur 1 ist ein bekanntes Papier 1 dargestellt, das eine eingeprägte Linienstruktur aufweist, wobei die Prägung nur auf einer Papierseite angeordnet ist. Die Vertiefungslinien 2 sind quer zur Papierbahn angeordnet, so daß im Kondensatorwickel die Linien 2 zu beiden Stirnseiten des Wickels reichen und so als Imprägnierkanäle längs zur Wickelachse dienen. Durch diese Ausgestaltung wird erreicht, daß eine wesentlich schnellere Imprägnierung des Kondensatorwickels ermöglicht wird. Zusätzlich zu dieser schnelleren Imprägnierung durch die Imprägnierkanäle vergrößert bzw. verbreitert sich die Imprägnierfront, das heißt die Grenzfläche zwischen der imprägnierten und der noch nicht imprägnierten Region ist bei dem Papier gemäß der Erfindung beim Imprägniervorgang größer. Damit ist die Aufnahmefähigkeit des Elektrolyten bezüglich des Elektrolytdampfes und von restlicher Luft im Wickel höher, so daß eine gleichmäßigere Imprägnierung erfolgt.

Ein Kondensatorwickel wurde mit einem Papier hergestellt, das 50 µm dick war und ein Flächengewicht von 27 g/cm² besaß. Die Linien waren ca. 20 µm tief und 220 µm breit und in einem 1 mm-Raster angeordnet. Zum Vergleich wurde ein Kondensatorwickel mit einem Papier der gleichen Dicke und dem gleichen Flächengewicht, jedoch ohne Linien als erste Papierlage in einem Hochvolt-Elektrolytkondensator eingebaut und getestet. Als zweite und dritte Papierlage wurden in beiden Gruppen Beilaufpapiere mit einer Dichte > 0,7 g/cm³ und einer Gesamtdicke von 40 µm eingesetzt.

Der Kondensatorwickel mit dem Standardpapier wurde im Standardprogramm imprägniert, während der Wickel mit dem strukturierten Papier mit reduzierter Temperatur imprägniert werden konnte, weil die erhöhte Imprägniergeschwindigkeit dies wegen des strukturierten Papiers zuließ, ohne die gesamte Imprägnierzeit verlängern zu müssen.

Unter der Überlastbedingung 0 V/125 °C wurde im Standardelektrolytkondensator so viel Gas erzeugt, daß nach 400 h die Sollbruchstelle im Gehäuse ansprach. Der Elektrolytkondensator mit dem strukturierten Papier gemäß der Erfindung hatte jedoch auch nach 700 h immer noch keine Anzeichen eines Überdrucks. Weitere Elektrolytkondensatoren unter gemäßigteren Testbedingungen zeigten nach 700 h noch keine Ausfälle.

Da das Papier nur auf einer Seite Imprägnierkanäle besitzt, bleibt die volle mechanische Stabilität im Gegensatz zum eingangs genannten gewellten Papier erhalten, das wegen seiner Wellblechform auf beiden Seiten Kanäle hat und daher dehnbar ist.

Bei Kondensatorwickeln mit einem strukturierten Papier gemäß der Erfindung wird somit bei gleicher Spannungsfestigkeit und gleicher mechanischer Qualität eine bessere und schnellere Imprägnierung ermöglicht als mit einem Standardpapier vergleichbarer Dicke und Spannungsfestigkeit.

In der Figur 2 ist ein erfindungsgemäßes Papier 1 dargestellt, bei dem sich Bereiche von acht Linien 2 im 1 mm-Raster mit 8 mm breiten Bereichen 3 ohne Linien periodisch abwechseln. Bei diesem Papier erfolgt die Imprägnierung (auch mit dünnflüssigen Elektrolyten) zuerst im Linienbereich und erst danach im Zwischenbereich. Hierdurch entstehen zunächst nur schmale, schlechter imprägnierte Zonen zwischen den Linienbereichen. Durch Ausgleichsdiffusion, die hier nur über ca. 4 mm erfolgen muß, wird wieder eine gleichmäßige Imprägnierqualität erreicht, das heißt, diese Imprägnierung ist mit der homogeneren Imprägnierqualität kleiner Elektrolytkondensatorwickel vergleichbar. Dadurch kann selbst mit dünnflüssigen Elektrolyten durch die Überstruktur eine vergrößerte Grenzfläche zwischen Elektrolyt und den vorläufig nur mit Luft und Dampf gefüllten Bereichen erreicht werden. Ein weiterer Vorteil dieser Überstruktur ist, daß beim Betrieb des Elektrolytkondensators das Gas, das durch den Leckstrom erzeugt wird, über die Kanäle abfließen kann und hierbei weniger Elektrolyt aus dem Wickel drückt.

Bei einer weiteren Ausführungsform ist es möglich, die Imprägnierkanäle schräg (ca. 10 - 30° zur Wickelachse verschoben) anzuordnen, so daß alle Bereiche, die weniger optimal imprägniert sind, ebenfalls schräg ausgebildet sind. Beim Betrieb, wenn die Struktur im Papier durch Quellvorgänge abgeschwächt ist, können Elektrolyt- und Gasströmungen im Elektrolytkondensator über diese schwächer imprägnierten Bereiche verlaufen und so eine Vermischung bewirken.

Beim Betrieb eines Elektrolytkondensators gehen alle Elektrolytbewegungen (zum Beispiel bei Temperaturwechseln) und Gasströmungen von der Wickelmitte aus. Das heißt, in der Mitte des Kondensators ist der Elektrolytaustausch am geringsten. Deshalb ist es wichtig, daß gerade diese Region die beste Imprägnierung besitzt und nicht, wie beim heutigen Stand der Technik, die schlechteste.

Die Papierstruktur innerhalb der Linienstruktur kann auch so ausgebildet werden, daß, wie es in Figur 3 dargestellt ist, die Imprägnierung von einer Seite (zum Beispiel von der oberen Wickelstirnseite) schneller erfolgt. Damit treffen die zwei Imprägnierfronten im unteren Wickelbereich B aufeinander. Hierdurch entsteht die schwächer imprägnierte Region nicht in der Wickelmitte im Bereich des "Hot-Spot" HS, sondern zum Beispiel in der unteren Wickelhälfte. In der unteren Hälfte kann dieser Mangel durch dort vorhandene Elektrolytbewegungen besser ausgeglichen werden. Außerdem ist bei Wechselstrombelastung des Elektrolytkondensators der heißeste Beireich (Hot-Spot) und damit die kritische Region im Wickel oben. Durch die Papierstruktur gemäß der Erfindung werden somit die empfindlichsten Regionen optimal imprägniert.

## Patentansprüche

1. Aluminium-Elektrolytkondensator
- mit einem Kondensatorwickel mit einer Anodenfolie, die mit einer dielektrisch wirksamen Sperrschicht versehen ist, und mit einer Kathodenfolie,
- mit einem betriebselektrolytgetränkten Abstandshalter, der eine eingeprägte Linienstruktur aufweist, welche von einer Stirnseite des Kondensatorwickels zur gegenüberliegenden Stirnseite angeordnet ist und die auf einer Oberfläche des Abstandshalters (1) angeordnet ist,
- und der in einem Gehäuse eingebaut ist,
**dadurch gekennzeichnet, daß**
die Linienstruktur (2) periodisch mit Bereichen (3) ohne Struktur abwechselt.

2. Aluminium-Elektrolytkondensator nach Anspruch 1,
**dadurch gekennzeichnet, daß**
die Linienstruktur (2) parallel zur Kondensatorwickelachse angeordnet ist.

3. Aluminium-Elektrolytkondensator nach Anspruch 1,
**dadurch gekennzeichnet, daß**
die Linienstruktur (2) in einem Winkel (α) gegenüber der Wikkelachse angeordnet ist.

4. Aluminium-Elektrolytkondensator nach einem der Ansprüche 1 bis 3,
**dadurch gekennzeichnet, daß**
die einzelnen Linien (2) der Linienstruktur bei einer Dicke des Abstandshalters (1) aus Papier von 50 µm zirka 20 µm tief und zirka 220 µm breit sind und in einem Abstand von zirka 1 mm angeordnet sind.

5. Aluminium-Elektrolytkondensator nach einem der Ansprüche 1 bis 4,
**dadurch gekennzeichnet, daß**
die Linienstruktur (2) sich nur über einen Teil der Breite des Abstandshalters (1) erstreckt.

## Claims

1. Aluminium electrolytic capacitor
- having a capacitor winding with an anode foil which is provided with a dielectric barrier layer, and having a cathode foil,
- having a spacer which is impregnated with operating electrolyte and has an embossed line structure which is arranged from one end side of the capacitor winding to the opposite end side and is arranged on one surface of the spacer (1),
- and which is installed in a housing,
**characterized in that** the line structure (2) periodically alternates with regions (3) without a structure.

2. Aluminium electrolytic capacitor according to Claim 1, **characterized in that** the line structure (2) is arranged parallel to the axis of the capacitor winding.

3. Aluminium electrolytic capacitor according to Claim 1, **characterized in that** the line structure (2) is arranged at an angle (α) with respect to the winding axis.

4. Aluminium electrolytic capacitor according to one of Claims 1 to 3, **characterized in that** the individual lines (2) of the line structure, for a paper spacer (1) thickness of 50 µm, are approximately 20 µm deep and approximately 220 µm wide and are arranged at a spacing of approximately 1 mm.

5. Aluminium electrolytic capacitor according to one of Claims 1 to 4, **characterized in that** the line structure (2) extends over only part of the width of the spacer (1).

## Revendications

1. Condensateur électrolytique à l'aluminium :
- comprenant un enroulement de condensateur ayant un ruban d'anode qui est muni d'une couche d'arrêt efficace diélectriquement, et ayant un ruban de cathode,
- ayant un espaceur imprégné d'électrolyte de fonctionnement, qui a une structure à traits imprimée qui est disposée d'un côté frontal de l'enroulement de condenseur au côté frontal opposé et qui est disposée sur une surface de l'espaceur (1),
- et qui est inséré dans un boîtier,
**caractérisé en ce que** la structure (2) à traits alterne périodiquement avec des parties (3) sans structure.

2. Condensateur électrolytique à l'aluminium suivant la revendication 1, **caractérisé en ce que** la structure (2) à traits est disposée parallèlement à l'axe de l'enroulement du condensateur.

3. Condensateur électrolytique à l'aluminium suivant la revendication 1, **caractérisé en ce que** la structure (2) à traits fait un angle (α) par rapport à l'axe de l'enroulement.

4. Condensateur électrolytique à l'aluminium suivant l'une des revendications 1 à 3, **caractérisé en ce que** les traits (2) de la structure à traits ont, pour une épaisseur de l'espaceur (1) en papier de 50 µm, une profondeur d'environ 20 µm et une largeur d'environ 220 µm et sont disposés à un intervalle d'environ 1 mm.

5. Condensateur électrolytique à l'aluminium suivant l'une des revendications 1 à 4, **caractérisé en ce que** la structure (2) à traits ne s'étend que sur une partie de la largeur de l'espaceur (1).
